# EUROPEAN PATENT APPLICATION

(11) **EP 4 342 309 A1**
(43) Date of publication of application: **27.03.2024**
(21) Application number: 22804609.0
(22) Date of filing: 13.05.2022
(51) Int. Cl.: A23L 27/20, A23L 5/00, A23L 5/20, A23L 27/21

(54) **FOUL-ODOR-SUPPRESSING COMPOSITION**

(30) Priority: 17.05.2021 JP 2021083397
(71) Applicant: AJINOMOTO CO., INC., Chuo-ku Tokyo 104-8315 (JP)
(72) Inventor: SUGIYAMA, Shingo, Kawasaki-shi, Kanagawa 210-8681 (JP); KAWAUCHI, Masato, Kawasaki-shi, Kanagawa 210-8681 (JP)
(74) Representative: Strehl Schübel-Hopf & Partner
(86) International application number: PCT/JP2022/020204
(87) International publication number: WO 2022/244697

(57) **Abstract**

The present invention relates to an inhibitor of off-flavors of food and drink, containing the following components (A) and (B):
(A) at least one γ-glutamyl peptide selected from the group consisting of a compound represented by the formula (I):

γ-Glu-X-Gly (I)

wherein X is an amino acid residue or an amino acid derivative residue, and
a compound represented by the formula (II):

γ-Glu-Y (II)

wherein Y is an amino acid residue or an amino acid derivative residue,
or a salt thereof, and

(B) at least one selected from the group consisting of γ-aminobutyric acid and serine.

## Description

### [Technical Field]

The present invention relates to compositions for suppressing off-flavors derived from animal or vegetable protein or amino acid and methods for suppressing off-flavors, and oral products with suppressed off-flavors and production methods thereof.

### [Background Art]

In recent years, for nutritional enrichment, health maintenance, and the like, various food products containing animal or vegetable proteins and amino acids are frequently used because they have high nutritional value and nutrition can be obtained easily, and the development of food products containing them is increasing. However, the unique odor found in food products, so-called off-flavors, may prevent continuous use, and a technique to suppress them has been demanded.

For example, it has been reported that γ-glutamyl peptide suppresses the smell of organic acids, that is, acid smell and uncomfortable smell of amino acids (Patent Literatures 1 and 2).

On the other hand, γ-aminobutyric acid (GABA), which also exists in the human brain and is said to have the effects of relieving tension and stress and calming the excitement of the brain, and serine, which is a non-essential amino acid, are not known to have any off-flavor suppressing effects.

### [Citation List]

### [Patent Literature]

[PTL 1]
   JP-A- 2019-187326
[PTL 2]
   JP-A- 2020-31564

### [Summary of Invention]

### [Technical Problem]

The present invention aims to provide compositions that can effectively suppress off-flavors of food and drink.

### [Solution to Problem]

The present inventors have conducted intensive studies in an attempt to solve the aforementioned problems and found that the off-flavors of food and drink can be suppressed and the effect can be sustained by simply adding γ-aminobutyric acid (hereinafter sometimes to be abbreviated as GABA) and serine, in addition to γ-glutamyl peptide, to the food and drink, and completed the present invention.

That is, the present invention includes the following embodiments.
[1] A composition for suppressing an off-flavor, comprising the following components (A) and (B):
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one selected from the group consisting of γ-aminobutyric acid and serine.
[2] The composition of [1], wherein the component (A) is γ-Glu-Val-Gly or a salt thereof.
[3] The composition of [1] or [2], wherein the off-flavor is an odor derived from at least one off-flavor substance selected from the group consisting of vegetable proteins, animal proteins, and amino acids.
[4] The composition of any of [1] to [3], wherein the weight ratio of components (A):(B) is 1:0.0001 to 10000 when converted to the weight of a free form.
[5] The composition of any of [1] to [4], which is used such that the amount of component (A) added to the oral product is 0.01 to 200 ppm by weight with respect to the total weight of the oral product, when converted to the weight of a free form.
[6] The composition of any of [1] to [5], which is used such that the amount of component (B) added to the oral product is 0.01 to 500 ppm by weight with respect to the total weight of the oral product, when converted to the weight of a free form.
[7] A method for suppressing an off-flavor of an oral product, comprising adding the following components (A) and (B):
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one selected from the group consisting of γ-aminobutyric acid and serine.
[8] The method of [7], wherein the component (A) is γ-Glu-Val-Gly or a salt thereof.
[9] The method of [7] or [8], wherein the off-flavor is an odor derived from at least one off-flavor substance selected from the group consisting of vegetable proteins, animal proteins, and amino acids.
[10] The method of any of [7] to [9], wherein the ratio of the amount of component (B) to be added to the amount of component (A) to be added is 1:0.0001 to 10000 when converted to the weight of a free form.
[11] The method of any of [7] to [10], wherein the amount of component (A) to be added with respect to the total weight of the off-flavor substance in the oral product is 0.01 ppm by weight to 100% by weight when converted to the weight of a free form.
[12] The method of any of [7] to [11], wherein the amount of component (B) to be added with respect to the total weight of the off-flavor substance in the oral product is 0.01 ppm by weight to 240% by weight when converted to the weight of a free form.
[13] A method for producing an oral product with a suppressed off-flavor, comprising adding the following components (A) and (B) to an oral product:
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one selected from the group consisting of γ-aminobutyric acid and serine.
[14] The method of [13], wherein the component (A) is γ-Glu-Val-Gly or a salt thereof.
[15] The method of [13] or [14], wherein the off-flavor is an odor derived from at least one off-flavor substance selected from the group consisting of vegetable proteins, animal proteins, and amino acids.
[16] The method of any of [13] to [15], wherein the ratio of the amount of component (B) to be added to the amount of component (A) to be added is 1:0.0001 to 10000 when converted to the weight of a free form.
[17] The method of any of [13] to [16], wherein the amount of component (A) to be added with respect to the total weight of the off-flavor substance in the oral product is 0.01 ppm by weight to 100% by weight when converted to the weight of a free form.
[18] The method of any of [13] to [17], wherein the amount of component (B) to be added with respect to the total weight of the off-flavor substance in the oral product is 0.01 ppm by weight to 240% by weight when converted to the weight of a free form.
[19] An oral product obtained by the method of any of [13] to [18] .

### [Advantageous Effects of Invention]

According to the present invention, since off-flavors derived from food product can be suppressed or reduced without imparting other flavors, various processed food products can be produced.

In addition, food products and the like can be ingested for a long period of time without stress because the present invention suppresses off-flavors that hinder continuous use.

### [Description of Embodiments]

The present invention relates to a composition for suppressing an off-flavor, comprising the following components (A) and (B):
(A) at least one γ-glutamyl peptide selected from the group consisting of a compound represented by the formula (I):

   γ-Glu-X-Gly (I)

   wherein X is an amino acid residue or an amino acid derivative residue, and
   a compound represented by the formula (II):

      γ-Glu-Y (II)
   wherein Y is an amino acid residue or an amino acid derivative residue,
   or a salt thereof (at times referred to as component (A) in the present invention), and
(B) at least one selected from the group consisting of GABA and serine (at times referred to as component (B) in the present invention)
   (the composition is at times referred to as "the composition of the present invention" in the present specification).

In the present invention, the "off-flavor" refers to an uncomfortable odor or flavor that impairs, when directly used in a food product, the original flavor of the food product due to a unique odor thereof, or an odor that is felt uncomfortable when ingested or taken.

For example, as an off-flavor of oral products such as food product and the like, an odor derived from a substance causing an off-flavor such as vegetable protein, animal protein, amino acid, vitamin, and the like (also to be referred to as off-flavor substance) can be mentioned, such as vegetable protein smell, animal protein smell, amino acid smell, vitamin smell, animal smell, and the like.

The vegetable protein smell means odors derived from vegetable proteins such as cereal, vegetable and the like or a decomposed product thereof and, for example, soybean protein-derived soybean smell (so-called green smell), pulse smell derived from pea protein, fava bean protein, chickpea protein, nut smell derived from almond protein, seed smell derived from sunflower protein, and the like can be mentioned.

The animal protein smell means odors derived from an animal protein or a decomposed product thereof and, for example, milk serum (whey) protein smell (so-called potato smell, stuffy smell), lecithin smell, gelatin smell, collagen smell, and the like can be mentioned.

Examples of the amino acid smell include odors (so-called potato smell, stuffy smell) derived from branched chain amino acid (valine, leucine, isoleucine), tryptophan, phenylalanine, threonine, histidine, methionine, arginine, cysteine, lysine, tyrosine, glycine and mixtures of these.

Examples of the vitamin smell include odors derived from vitamin A, vitamin B₁, vitamin B₂, vitamin B₆, vitamin B₁₂, vitamin C, vitamin D, vitamin E, niacin, pantothenic acid, folic acid, biotin, vitamin P, and mixtures thereof.

As the animal smell, grass-fed smell and the like can be mentioned.

In the present invention, the "suppression" of off-flavor is a concept that includes reduction of off-flavor and masking of off-flavor, and means reduction or suppression of the intensity of the odor of off-flavor substances to below the recognition limit. The presence or absence and the intensity of odor can be determined by, for example, sensory evaluation by a panel of experts. In the present invention, an off-flavor suppressing effect can be obtained without particularly imparting a strange flavor.

### (A) γ-glutamyl peptide

As the γ-glutamyl peptide in the present invention, the above-mentioned γ-glutamyl tripeptide represented by the formula (I) and γ-glutamyl dipeptide represented by the formula (II) can be mentioned. In the above-mentioned formulas, "γ-" means that X or Y is bonded via the carboxyl group at the γ-position of glutamic acid. As the γ-glutamyl peptide, the above-mentioned one kind of γ-glutamyl peptide may be used, or two or more kinds of γ-glutamyl peptides may be used in combination.

X and Y in the formulas (I) and (II) are each an amino acid residue or an amino acid derivative residue. Examples of the amino acid include neutral amino acids such as glycine (Gly), alanine (Ala), valine (Val), leucine (Leu), isoleucine (Ile), serine (Ser), threonine (Thr), cysteine (Cys), methionine (Met), asparagine (Asn), glutamine (Gln), proline (Pro), hydroxyproline (Hyp), and the like, acidic amino acids such as aspartic acid (Asp), glutamic acid (Glu), and the like, basic amino acids such as lysine (Lys), arginine (Arg), histidine (His), and the like, aromatic amino acids such as phenylalanine (Phe), tyrosine (Tyr), tryptophan (Trp), and the like, and other amino acids such as ornithine (Orn), sarcosine (Sar), citrulline (Cit), norvaline (Nva), norleucine (Nle), α-aminobutyric acid (Abu), taurine (Tau), tert-leucine (t-Leu), cycloleucine (Cle), α-aminoisobutyric acid (2-methylalanine) (Aib), penicillamine (Pen), homo serine (Hse), and the like.

The amino acid derivatives refer to various derivatives of the above-mentioned amino acids. Examples of the amino acid derivative include unnatural amino acid, amino alcohol, and amino acids in which one or more of the functional groups such as terminal carbonyl group, terminal amino group, and the thiol group of cysteine are substituted with various substituents. Specific examples of the substituent include alkyl group, acyl group, hydroxyl group, amino group, alkylamino group, nitro group, sulfonyl group, and various protecting groups.

As the amino acid derivative, for example, Arg(NO₂) :N-γ-nitroarginine, Cys(SNO) :S-nitroso cysteine, Cys(S-Me) :S-methylcysteine, Cys(S-allyl) :S-allylcysteine, Val-NH₂:valine amide, Val-ol:valinol(2-amino-3-methyl-1-butanol), Met(O) :methionine sulfoxide, Cys(S-Me) (O) :S-methylcysteine sulfoxide, and the like can be mentioned.

As the γ-glutamyl peptide, for example, γ-Glu-Val-Gly, γ-Glu-Nva-Gly, γ-Glu-Abu, and γ-Glu-Nva can be mentioned, among which γ-Glu-Val-Gly is preferred.

In the present invention, the amino acid and amino acid derivative constituting the γ-glutamyl peptide are in an L-form unless particularly noted.

In the present invention,, the salt of γ-glutamyl peptide is not particularly limited as long as it can be ingested orally. For example, as the salts for acidic groups such as carboxyl group and the like, salts with alkali metals such as ammonium salt, sodium, potassium and the like, salts with alkaline earth metals such as calcium, magnesium, and the like, salts with organic amines such as aluminum salt, zinc salt, triethylamine, ethanolamine, morpholine, pyrrolidine, piperidine, piperazine, dicyclohexylamine and the like, arginine, lysine and the like basic amino acid salt with can be mentioned. Examples of the salt with basic group, amino group, and the like include salts with inorganic acids such as hydrochloric acid, sulfuric acid, phosphoric acid, nitric acid, hydrobromic acid and the like, salts with organic carboxylic acid such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, malic acid, methylmalonic acid and the like, salts with organic sulfonic acid such as methanesulfonic acid, benzenesulfonic acid, p-toluenesulfonic acid, and the like can be mentioned. Only one kind of salt may be used, or two or more kinds of salts may be used in combination.

As γ-glutamyl peptide and a salt thereof, commercially available products may be used, or those obtained by appropriate production may also be used.

The production method of peptide is not particularly limited and, for example, known methods can be utilized. Examples of the known method include (1) a method for chemically synthesizing peptide and (2) a method for synthesizing peptide by an enzymatic reaction. When synthesizing a comparatively short peptide with 2 or 3 amino acid residues, a method for chemical synthesis is particularly convenient.

When chemically synthesizing peptides, the peptides can be synthesized or semisynthesized using a peptide synthesizer. As a method for chemically synthesizing peptides, solid-phase peptide synthesis can be mentioned. The synthesized peptide can be purified by conventional means, such as ion exchange chromatography, reversed-phase high performance liquid chromatography, and affinity chromatography. Such solid-phase peptide synthesis methods and subsequent peptide purification are well known in the technique field.

When synthesizing peptides by an enzymatic reaction, for example, the method described in WO2004/011653 can be used. Specifically, for example, dipeptide or tripeptide can be synthesized by reacting an amino acid or dipeptide whose carboxyl group has been esterified or amidated with an amino acid whose amino group is free (for example, an amino acid whose carboxyl group is protected) in the presence of a peptidyl transferase. The synthesized dipeptide or tripeptide can be appropriately purified. Examples of the peptidyl transferase include cultures of microorganisms that have the ability to generate peptides, culture supernatants isolated from the cultures, bacterial cells isolated from the cultures, processed bacterial cells of the microorganisms, and peptidyl transferases isolated therefrom. As the peptidyl transferases, those purified as appropriate can be used where necessary.

The γ-glutamyl peptide can be produced, for example, by culturing a microorganism capable of producing the γ-glutamyl peptide and recovering the γ-glutamyl peptide from the culture medium or bacterial cells. Specifically, for example, yeast containing a high concentration of γ-glutamyl peptide such as γ-Glu-Abu can be obtained by the method described in JP-A-2012-213376. In addition, γ-glutamyl peptide can be produced, for example, by recovering from agricultural/aquatic/livestock products containing the γ-glutamyl peptide.

The γ-glutamyl peptide may or may not be a purified product. That is, as the γ-glutamyl peptide, a material containing the peptide at a high content may also be used. "Containing γ-glutamyl peptide at a high content" is not limited to blending the peptide itself, but also includes blending a material containing the peptide at a high content. "Containing γ-glutamyl peptide at a high content" means that the content of γ-glutamyl peptide is not less than 100 ppm by weight. That is, "blending (adding) γ-glutamyl peptide" is not limited to blending the peptide itself, but also includes blending a material containing a high content of the peptide. Examples of the material containing a high content of γ-glutamyl peptide include fermentation products such as culture solution, bacterial cells, and culture supernatant obtained by culturing microorganisms capable of producing the peptide, and processed products thereof. The processed products include those obtained by subjecting the above-mentioned fermentation products to treatments such as concentration, dilution, drying, fractionation, extraction, and purification. Examples of such processed products include yeast extracts containing γ-glutamyl peptides such as γ-Glu-Abu (JP-A-2012-213376). In addition to yeast extract, there may be foods and drinks (including ingredients and seasonings) that naturally contain γ-glutamyl peptide. Such foods and drinks (including ingredients and seasonings) other than yeast extract may be excluded from the "material containing γ-glutamyl peptide at a high content" in the present invention. The γ-glutamyl peptide may be purified to any desired degree. For example, the γ-glutamyl peptide may have a purity of not less than 50% by weight, not less than 70% by weight, not less than 90% by weight, or not less than 95% by weight.

The concentration and content ratio of γ-glutamyl peptide in the composition of the present invention can be appropriately set according to various conditions such as the kind of γ-glutamyl peptide, the concentration of γ-glutamyl peptide at the time of eating, and the amount of use of the composition of the present invention.

The amount (concentration) of the component (A) γ-glutamyl peptide in the composition of the present invention to be added to an oral product is such that the concentration at the time of eating is within a range desired from the aspect of suppressing off-flavors. For example, it is used such that its concentration at the time of eating is generally not less than 0.01 ppm by weight, preferably not less than 0.05 ppm by weight, more preferably not less than 0.1 ppm by weight, and the upper limit is generally not more than 200 ppm by weight, preferably not more than 100 ppm by weight, more preferably not more than 50 ppm by weight, with respect to the total weight of the oral product, when converted to the weight of a free form of the component (A) γ-glutamyl peptide.

Specifically, the concentration is generally 0.01 to 200 ppm by weight, preferably 0.05 to 100 ppm by weight, more preferably 0.1 to 50 ppm by weight.

In the present specification, the concentration at the time of eating means the concentration of component (A) γ-glutamyl peptide at the time of intake of an oral product (oral administration, oral use), and shows the concentration at the time of eating after cooking. The concentration at the time of intake of quasi-drugs such as toothpaste and mouthwash refers to the concentration at the time of use, that is, the concentration at the time of placing same in the mouth. For example, when the oral product is a concentrated drink, it means the concentration of γ-glutamyl peptide in the drink when it is drunk after dilution, and when the oral product is a powdered drink, it means the concentration of γ-glutamyl peptide in the drink when it is drunk after dissolution in drinking water or the like.

### (B) γ-aminobutyric acid (GABA) and serine

As component (B) in the present invention, GABA, serine, or a mixture thereof can be mentioned.

GABA is one of the amino acids, which is a substance that primarily functions as an inhibitory neurotransmitter.

The terms γ-aminobutyric acid and GABA in this specification show a concept that includes the salt as well. The form of the salt is not particularly limited as long as it is a pharmacologically acceptable salt, acid addition salts, salts with bases, and the like can be mentioned.

Specifically, salts with inorganic base, organic base, inorganic acid, and organic acid, salt with amino acid, and the like can be mentioned.

Examples of the salt with inorganic base include salts with alkali metals such as lithium, sodium, potassium, and the like, salts with alkaline earth metals such as magnesium, calcium, and the like, ammonium salt, and the like.

Examples of the salt with organic base include salts with alkanol amines such as monoethanolamine, diethanolamine, triethanolamine, and the like, salts with heterocyclic amines such as morpholine, piperidine, and the like, and the like.

Examples of the salt with inorganic acid include salts with hydrohalic acids (hydrochloric acid, hydrobromic acid, hydroiodic acid, etc.), sulfuric acid, nitric acid, phosphoric acid, etc., and the like.

Examples of the salt with organic acid include salts with monocarboxylic acids such as formic acid, acetic acid, propanoic acid and the like; salts with saturated dicarboxylic acids such as oxalic acid, malonic acid, malic acid, succinic acid, and the like; salts with unsaturated dicarboxylic acids such as maleic acid, fumaric acid, and the like; salts with tricarboxylic acids such as citric acid and the like; salts with keto acids such as α-ketoglutaric acid and the like, and the like.

Examples of the salt with amino acid include salts with aliphatic amino acids such as glycine, alanine, and the like; salts with aromatic amino acids such as tyrosine and the like; salts with basic amino acids such as arginine and the like; salts with acidic amino acids such as aspartic acid, glutamic acid, and the like; and salts with amino acids that form lactams such as pyroglutamic acid and the like.

In the present invention, GABA in a free form or in one of the above-mentioned salt forms may be used alone, or two or more kinds thereof may be used in combination0.

The GABA contained in the composition of the present invention may be GABA itself or a GABA-containing food material that can be used in food and drink products. For example, germinated brown rice and fresh tea leaves with increased GABA content by processing, Monascus purpureus and yeast extract containing high levels of GABA or GABA prepared from starting materials thereof can be used. Alternatively, one prepared by reacting a starting material containing glutamic acid or glutamic acid with glutamic acid decarboxylase, or a GABA-containing food material prepared from a fermented product obtained by fermentation using a microorganism (lactobacillus, yeast, koji, etc.) that has glutamic acid decarboxylase activity can also be used. As the GABA-containing food material, a GABA-containing food material prepared from a material free of components that influence odor is preferred from the aspect of suppression of off-flavors.

Serine contained in the composition of the present invention is not limited as long as it does not impair the effects of the present invention. L-form and DL-form are preferred, and L-form is more preferred.

Serine in the present invention may be produced by any production method such as protein hydrolysis method, chemical synthesis method, enzyme method, fermentation method, or the like, or a commercially available product can also be used.

Serine in the present invention can also be obtained by enzymatically hydrolyzing natural proteins having serine-containing amino acid sequences.

Serine in the present invention can be used not only in a free form but also in the form of a salt, and the term serine in this specification is a concept that includes the salt as well. The form of the salt is not particularly limited as long as it is a pharmacologically acceptable salt, acid addition salts, salts with bases, and the like can be mentioned.

Specifically, salts recited for the above-mentioned GABA and the like can be used.

Each of the above-mentioned salts may be a hydrate (hydrated salt), and such hydrates include, for example, 1 hydrate to 6 hydrate, and the like.

In the present invention, serine in a free form or in one of the above-mentioned salt forms may be used alone, or two or more kinds thereof may be used in combination.

The amount (concentration) of the component (B) in the composition of the present invention to be added to an oral product is such that the concentration at the time of eating is within a range desired from the aspect of suppressing off-flavors. For example, it is used such that its concentration at the time of eating is generally not less than 0.01 ppm by weight, preferably not less than 0.1 ppm by weight, more preferably not less than 0.15 ppm by weight, and the upper limit is generally not more than 500 ppm by weight, preferably not more than 200 ppm by weight, more preferably not more than 120 ppm by weight, with respect to the total weight of the oral product, when converted to the weight of a free form.

Specifically, the concentration is generally 0.01 to 500 ppm by weight, preferably 0.1 to 200 ppm by weight, more preferably 0.15 to 120 ppm by weight.

In the present specification, the concentration at the time of eating means the concentration of component (B) at the time of intake of an oral product (oral administration, oral use), and shows the concentration at the time of eating after cooking. The concentration at the time of taking quasi-drugs such as toothpaste and mouthwash refers to the concentration at the time of use, that is, the concentration at the time of placing same in the mouth. For example, when the oral product is a concentrated drink, it means the concentration of component (B) in the drink when it is drunk after dilution, and when the oral product is a powdered drink, it means the concentration of component (B) in the drink when it is drunk after dissolution in drinking water or the like.

Specifically, the amount (concentration) of GABA in the composition of the present invention to be added to an oral product is such that the concentration of GABA at the time of eating is within a range desired from the aspect of suppressing off-flavors. For example, it is used such that its concentration at the time of eating is generally not less than 0.01 ppm by weight, preferably not less than 0.1 ppm by weight, more preferably not less than 0.15 ppm by weight, and the upper limit is generally not more than 10 ppm by weight, preferably not more than 5 ppm by weight, more preferably not more than 1.2 ppm by weight, with respect to the total weight of the oral product, when converted to the weight of a free form of GABA.

Specifically, the concentration is generally 0.01 to 10 ppm by weight, preferably 0.1 to 5 ppm by weight, more preferably 0.15 to 1.2 ppm by weight.

The content of GABA in the oral product can be analyzed and measured by a general amino acid analysis method and a high performance liquid chromatography (HPLC) method, after performing an extraction treatment in a solvent such as chloroform or the like.

The amount (concentration) of serine in the composition of the present invention to be added to an oral product is such that the concentration of serine at the time of eating is within a range desired from the aspect of suppressing off-flavors. For example, it is used such that its concentration at the time of eating is generally not less than 1 ppm by weight, preferably not less than 10 ppm by weight, more preferably not less than 15 ppm by weight, and the upper limit is generally not more than 500 ppm by weight, preferably not more than 200 ppm by weight, more preferably not more than 120 ppm by weight, with respect to the total weight of the oral product, when converted to the weight of a free form of serine.

Specifically, the concentration is generally 1 to 500 ppm by weight, preferably 10 to 200 ppm by weight, more preferably 15 to 120 ppm by weight.

The content of serine in the oral product can be analyzed and measured by a general amino acid analysis method and a high performance liquid chromatography (HPLC) method.

The total amount of components (A) and (B) contained in the composition of the present invention is generally not less than 0.001% by weight, preferably not less than 0.1% by weight, more preferably not less than 1% by weight, with respect to the total weight of the composition of the present invention. The amount is generally not more than 100% by weight, preferably not more than 99% by weight, more preferably not more than 90% by weight, with respect to the composition of the present invention.

Specifically, the amount is generally 0.001 to 100% by weight, preferably 0.1 to not less than 99% by weight, more preferably 1 to 90% by weight.

The concentration and content ratio of component (A) in the composition of the present invention can be appropriately set according to various conditions such as the kind of γ-glutamyl peptide and the kind of component (B), and the kind of a food product for which the composition of the present invention is used.

The weight ratio of components (A) and (B) ((A):(B)) in the composition of the present invention is generally 1:0.0001 to 10000, preferably 1:0.0005 to 5000, more preferably 1:0.001 to 2000, further preferably 1:0.003 to 1200, from the aspect of suppressing off-flavors, when converted to the weight of a free form.

The weight ratio of components (A) and (B) GABA ((A):GABA)) in the composition of the present invention is generally 1:0.0001 to 100, preferably 1:0.0005 to 50, more preferably 1:0.001 to 20, further preferably 1:0.003 to 12, from the aspect of suppressing off-flavors, when converted to the weight of a free form.

The weight ratio of components (A) and (B)serine ((A):serine) in the composition of the present invention is generally 1:0.01 to 10000, preferably 1:0.05 to 5000, more preferably 1:0.1 to 2000, further preferably 1:0.3 to 1200, from the aspect of suppressing off-flavors, when converted to the weight of a free form.

In the composition of the present invention, when component (B) contains both GABA and serine, the weight ratio (GABA:serine) is generally 1:1 to 5000, preferably 1:5 to 2000, more preferably 1:10 to 1000, further preferably 1:12.5 to 800, from the aspect of suppressing off-flavors, when converted to the weight of a free form.

The composition of the present invention can be produced using only components (A) and (B) or by adding "other components", and according to a method conventionally used in the field of food production and the like.

The "other components" are not particularly limited as long as they do not impair the effects of the present invention. For example, amino acids such as alanine, glutamic acid, glycine and the like, and salts thereof; organic acids such as acetic acid, tartaric acid and the like and salts thereof; inorganic salts such as edible salt, sodium chloride, potassium chloride, and the like; dietary fibers such as indigestible dextrin and the like; saccharides such as sugar, honey, maple syrup, sucrose, glucose, fructose, isomerized sugar, oligosaccharide, and the like; sugar alcohols such as xylitol, erythritol, and the like; high-intensity sweetener; nucleic acids such as inosinic acid, guanylic acid, xanthylic acid, and the like and salts thereof; pH buffering agent, excipient, filler, flavor, edible oil, ethanol, and water can be mentioned.

As "other component", one kind of component may be used, or two or more kinds of components may be used in combination.

Since the composition of the present invention has almost no effect on the note of other flavor components, it can also be prepared as a flavor composition having the above-mentioned off-flavor suppressing action by combining with other flavor components, and can be used preferably.

In addition, the composition of the present invention may contain one or more kinds of other flavor components. Such other flavor component may be any as long as it does not impair the effects of the present invention when used in combination with the composition of the present invention, and preferably does not suppress the aroma of the other flavor components when used in combination with the composition of the invention. Examples of such flavor component include citrus-based flavor, fruit-based flavor, milk-based flavor, vanilla-based flavor, tea-based flavor, cocoa or chocolate flavor, coffee flavor, mint-based flavor, spice-based flavor, nut-based flavor, foreign liquor-based flavor, flower-based flavor, vegetable-based, and the like. Specifically, citronellal, limonene, 2-methylpyrazine, butanoic acid, methyl anthranilate, nootkatone, E-beta-damascone, S-(2-methyl-3-furyl)ethanethioate, beta-caryophyllene oxide, beta-ionone, 2,5-dihydroxy-1,4-dithiane, methyl anthranilate, S-furfurylthioformate, 1-isothiocyanate-3-(methylthio)propane, 1,4-dioxacycloheptadecane-5,17-dione, sclareol, sclareolide, and the like can be mentioned. From the aspect that off-tastes can be controlled as well, citronellal, limonene, 2-methylpyrazine, butanoic acid, methyl anthranilate, and nootkatone are preferred.

The composition of the present invention can contain other components in a proportion of 0 to 99.999% by weight, preferably 1 to 99.9% by weight, more preferably 10 to 99%, of the composition as long as the effect of the present invention can be afforded.

The form of the composition of the present invention is not particularly limited. It is a form that is easy to add to foods and drinks, and powder, granules, liquid, syrup, gel, paste, cube, and the like can be mentioned. Formulation can be performed by a conventional method.

The composition of the present invention can be produced by a method known per se or a method analogous thereto.

The composition of the present invention can also be used as an off-flavor inhibitor.

The present invention also includes a method for suppressing an off-flavor of an oral product, including adding the following components (A) and (B) (hereinafter sometimes to be abbreviated as the method of the present invention).

The definitions of components (A) and (B) that can be used in the method of the present invention are as described above.

In addition, the kind of off-flavor substance in the oral product in the method of the present invention is as described above.

In the present invention, the "oral product" means a substance that can be ingested or taken orally, and specific examples thereof include food product, seasoning, pharmaceutical product, quasi-drug, perfumery, and the like. In the present invention, the "food" broadly includes foods that can be ingested orally (excluding medicine), and unless otherwise specified, also includes so-called foods, beverages, seasonings, supplements, and the like. Food is a concept also including food compositions.

The oral product in the present invention is not particularly limited as long as it contains an off-flavor substance and is required to suppress off-flavors. For example, those containing at least vegetable proteins, animal proteins, amino acids, or salts thereof are preferred.

Food products include, for example, food products containing vegetable proteins including pulses such as soybean and processed foods thereof, food products containing animal proteins such as dairy products, amino acid-containing food products, and the like.

Food products containing vegetable protein include, for example, beverages such as soy milk, soy milk beverage, processed soy milk, soft drinks, carbonated drinks, vegetable drinks, vegetable and/or fruit drinks, sports drinks, jelly drinks, powdered drinks, and the like; alcoholic drinks; tea drinks such as coffee drinks, tea drinks, and the like; soybean powder (soy flour) prepared by pulverizing roasted beans; tofu, dried beancurd (yuba), wheat gluten cake prepared from soy milk; freeze-dried tofu, thick fried tofu, *ganmodoki,* deep-fried bean curd, grilled tofu and the like prepared from tofu; tofu refuse; stewed beans and steamed beans; soybean and processed food products thereof prepared from steamed beans, such as soybean paste, fermented soybeans, and the like.

They also include food products that are prepared using the above-mentioned soybean processed food products as ingredients and blending together, where necessary, other ingredients. Examples include, but are not limited to, confectioneries such as soy milk pudding, tofu refuse cake, cake with soy flour, tofu refuse cookie, nutrition bar with soy flour, *kinakonejiri* (soybean flour twist), and soy flour candy; breads such as low-carb bread with soybean flour; meat-containing food products such as soybean meat, hamburg steak with soybean protein, meat ball, *gyoza* dumpling, *shumai* dumpling, fried cake of minced meat, deep-fried soybean protein, and hams and sausages containing soybean protein; nutrient-enriched foods such as protein powder, jelly food, and powdered milk for infant rearing, for nutritional enrichment purposes; noodles containing soybean protein; soybean protein-containing batter for deep-frying; and seafood-containing food products such as soybean protein-containing fish sausages, boiled fish paste, and chikuwa, soups (including dried soups); other processed food products; and frozen food products.

As food products having a green smell of plants, processed tomato food products, processed olive food products, and the like can be mentioned. Processed tomato food products include tomato sauce, concentrated tomatoes, tomato puree, tomato paste, tomato juice, solid tomato, and tomato soup. Further, processed olive food products include olive oil, olive paste, and the like.

Examples of the food products containing animal protein include drinks such as milk beverage, lactic fermenting beverage, beverage (including those containing fruit juice), carbonated drinks, fruit juiced rinks, vegetable drinks, vegetable and/or fruit drinks, sports drink, jelly drinks, powder drinks, and the like; alcoholic drinks; tea drinks such as coffee drinks, tea drinks, and the like; soups such as corn soup, consomme soup (e.g., chicken, pork, beef, etc.), potage soup, chicken broth, soup with egg, soup with *wakame* seaweed, soup with shark fin, Chinese-style soup, curry flavor soup, ramen noodle soup, Japanese-style clear soup, miso soup and the like, and instant powder food products thereof; desserts such as whip cream, jam, fruit syrup, jelly, bavarois and yoghurt and the like; retort food products such as curry, stew, *gyudon,* soup and the like; hamburg steak, hum, sausage, *gyoza* dumpling, shumai dumpling, deep-fried food, pork cutlet and the like; processed marine products such as boiled fish-paste, tubular fish-paste and the like; dairy products such as cheese and the like; dairy products such as butter, fermented milk, powdered milk, and the like; frozen desserts such as ice cream, ice milk, lact ice, sherbet, ice dessert, and the like; confectioneries such as gummi candy, candy, gum, tablet confectionery, snack, and the like; breads; noodles (fried noodles and nonfried noodles and the like instant noodles) such as Japanese wheat noodles, *hiyamugi, somen,* buckwheat noodle, Chinese noodle, spaghetti, macaroni, rice noodle, gelatin noodle, *won ton* dumplings, and the like; nutrition bar: and the like.

Amino acid-containing foods are not particularly limited as to the form thereof as long as they contain amino acids. For example, nutritional aid food products, energy drinks, sports drinks, jelly food products, beverage water (carbonated drinks, fruit juice drinks, tea drinks, lactic fermenting beverage, etc.), alcoholic drinks, that contain high doses of amino acids, food products that are the above-described food products containing amino acids, and the like can be mentioned.

The food product may be provided (sold, distributed) in a form for eating as is, or may be provided in a form that requires a predetermined processing or cooking to have a form suitable for eating. For example, the food product may be eaten or drunk after preparation, before or at the time of eating, into a form suitable for eating. For example, in the case of a beverage such as a soft drink, it may be provided as a packaged beverage that can be taken as is, or as a concentrate such as a powder that can be diluted and eaten.

In addition, the food product is not limited to general food products, but also includes what is called health food products and medical food products such as nutrition aid food product (supplement), foods with nutritional function, foods for specified health use, and the like. For example, the food products exemplified above may be provided as general food products, or as health food products or medical food products.

Examples of the seasoning include savory seasoning, flavor seasoning, menu seasoning, mayonnaise; solid seasonings such as sugar, salt, and the like; liquid seasonings such as dressing, ketchup, gravy, sauce (ex. demiglace sauce, medium thick sauce, white sauce, cheese sauce, etc.) and the like; semisolid seasonings such as miso and the like; and the like.

In the present specification, the "savory seasoning" refers to a seasoning produced from a natural substance as a material according to a method such as extraction, decomposition, heating, fermentation, and the like. Concrete examples thereof include various meat extracts such as chicken meat extract, beef meat extract, pork meat extract, sheep meat extract, and the like; various bone extracts such as chicken bone extract, beef bone extract, pork bone extract, and the like; various seafood extracts such as bonito extract, mackerel extract, croaker extract, scallop extract, crab extract, shrimp extract, dried sardine extract, dried adductor extract, and the like; various dried fish extracts such as dried bonito extract, dried mackerel extract, dried bullet mackerel extract, and the like; various vegetable extracts such as onion extract, Chinese cabbage extract, celery extract, and the like; various seaweed extracts such as kelp extract and the like; various spice extracts such as garlic extract, chili extract, pepper extract, cacao extract, and the like; yeast extracts; various protein hydrolysates; various fermentation seasonings such as soy sauce, fish sauce, shrimp sauce, *miso* and the like, and the like, and mixtures thereof, processed product (e.g., soy sauce processed product such as Japanese noodle soup base, citrus seasoned soy sauce, and the like), and the like. The "flavor seasoning" refers to a seasoning used to impart aroma, flavor and taste of a flavor material to a food, and can be produced by, for example, adding sugar, salt and the like to a savory seasoning, or the like. Specific examples of the flavor seasoning include various meat flavor seasonings such as chicken flavor seasoning, beef flavor seasoning, pork flavor seasoning, and the like; various seafood flavor seasonings such as bonito flavor seasoning, dried sardine flavor seasoning, dried adductor flavor seasoning, crustacean flavor seasoning, and the like; various spicy vegetable flavor seasonings; kelp flavor seasoning and the like. The "menu seasoning" refers to a seasoning suitable for cooking a particular menu (Chinese-style menu, etc.). Concrete examples thereof include Chinese-style combined seasoning, combined seasoning, generic paste seasoning, seasoning mix for cooked rice mixed with ingredients, seasoning mix for Chinese fried rice, spice mix, and the like.

The pharmaceutical product is not particularly limited as long as it contains the above-mentioned off-flavor substance, and includes any oral pharmaceutical products. Examples include vitamins, revitalizers, nutritional supplements, supplements, and various pharmaceutical preparations. The form of these is not questioned, and they may be any of powders, granules, pills, tablets, liquids, syrups, and the like. Among these, orally disintegrating tablets, troches, chewable tablets, and the like, which are taken by dissolving in the mouth, are preferred.

Examples of quasi-drugs include toothpastes, oral algefacients, halitosis prophylaxis agents, halitosis elimination agents, mouthwashes, gargles, and the like.

Perfumery includes lip rouge and the like.

In the present invention, the off-flavor substance that can be contained in the oral product is not particularly limited as long as it can be orally ingested, and an off-flavor substance produced by a method known per se or a method analogous thereto may be used. For example, it may be a chemically synthesized product produced by a chemical synthesis method, or an isolated product extracted and purified from a material containing an off-flavor substance. In addition, a material containing an off-flavor substance may be used as it is or after purification to a desired degree. The off-flavor substance may be a commercially available product.

The method and conditions for adding the components (A) and (B) of the present invention to an oral product (e.g., food, oral medicine, etc.) are not particularly limited, and addition can be performed by a method known per se or a method analogous thereto, according to the kind and form of the components (A) and (B) of the present invention, the kind of the oral product to which the components (A) and (B) are added, and the like. The time when the components (A) and (B) are added to an oral product is not particularly limited, and they can be added, for example, during the production of the oral product, after the production of the oral product, or the like. The components (A) and (B) may also be added to a raw material before producing the oral product. The components (A) and (B) may also be added at the same time or at different times, and the order of addition is not particularly limited.

In the method of the present invention, the amount of the components (A) and (B) to be added to the oral product can be set according to the amount of an off-flavor substance to be added to the oral product.

For example, when additional addition of an off-flavor substance to "an oral product containing an off-flavor substance but not exhibiting an unacceptable off-flavor" (that is, increasing the amount of the off-flavor substance contained in the oral product) causes an unacceptable off-flavor of the composition, the amount of the components (A) and (B) to be added to the oral product may be set according to the amount (increased amount) of the additionally added off-flavor substance. It is not necessary to consider the amount of an off-flavor substance originally contained in the oral product (oral product that does not exhibit an unacceptable off-flavor) before the additional addition of the off-flavor substance.

When an oral product produced by adding an off-flavor substance as one of the materials exhibits an off-flavor, the amount of the components (A) and (B) to be added to the oral product can be set according to the amount of the off-flavor substance used as the material.

When an off-flavor substance is additionally added to an oral product having an off-flavor produced by adding an off-flavor substance as one of the materials, the amount of the components (A) and (B) to be added to the oral product can be set according to the total amount of the off-flavor substance used as the material and the amount of the off-flavor substance added additionally.

The addition amount of the components (A) and (B) to the oral product (amount of components (A) and (B) to be added to the oral product) in the method of the present invention is as follows.

The amount (concentration) of the component (A) γ-glutamyl peptide in the method of the present invention to be added to an oral product is such that the concentration at the time of eating is within a range desired from the aspect of suppressing off-flavors. For example, it is added such that its concentration at the time of eating is generally not less than 0.01 ppm by weight, preferably not less than 0.05 ppm by weight, more preferably not less than 0.1 ppm by weight, and the upper limit is generally not more than 200 ppm by weight, preferably not more than 100 ppm by weight, more preferably not more than 50 ppm by weight, with respect to the total weight of the oral product, when converted to the weight of a free form of the component (A) γ-glutamyl peptide.

Specifically, the concentration is generally 0.01 to 200 ppm by weight, preferably 0.05 to 100 ppm by weight, more preferably 0.1 to 50 ppm by weight, with respect to the weight of the oral product.

The amount (concentration) of the component (B) in the method of the present invention to be added to an oral product is such that the concentration of component (B) at the time of eating is within a range desired from the aspect of suppressing off-flavors. For example, it is added such that its concentration at the time of eating is generally not less than 0.01 ppm by weight, preferably not less than 0.1 ppm by weight, more preferably not less than 0.15 ppm by weight, and the upper limit is generally not more than 500 ppm by weight, preferably not more than 200 ppm by weight, more preferably not more than 120 ppm by weight, with respect to the total weight of the oral product, when converted to the weight of a free form.

Specifically, the concentration is generally 0.01 to 500 ppm by weight, preferably 0.1 to 200 ppm by weight, more preferably 0.15 to 120 ppm by weight.

The amount (concentration) of GABA in the method of the present invention to be added to an oral product is such that the concentration of GABA at the time of eating is within a range desired from the aspect of suppressing off-flavors. For example, GABA is added such that its concentration at the time of eating is generally not less than 0.01 ppm by weight, preferably not less than 0.1 ppm by weight, more preferably not less than 0.15 ppm by weight, and the upper limit is generally not more than 10 ppm by weight, preferably not more than 5 ppm by weight, more preferably not more than 1.2 ppm by weight, with respect to the total weight of the oral product, when converted to the weight of a free form of GABA.

Specifically, the concentration is generally 0.01 to 10 ppm by weight, preferably 0.1 to 5 ppm by weight, more preferably 0.15 to 1.2 ppm by weight.

The amount (concentration) of serine in the method of the present invention to be added to an oral product is such that the concentration of serine at the time of eating is within a range desired from the aspect of suppressing off-flavors. For example, it is added such that its concentration at the time of eating is generally not less than 1 ppm by weight, preferably not less than 10 ppm by weight, more preferably not less than 15 ppm by weight, and the upper limit is generally not more than 500 ppm by weight, preferably not more than 200 ppm by weight, more preferably not more than 120 ppm by weight, with respect to the total weight of the oral product, when converted to the weight of a free form of serine.

Specifically, the concentration is generally 1 to 500 ppm by weight, preferably 10 to not less than 200 ppm by weight, more preferably 15 to 120 ppm by weight.

In the method of the present invention, the amount of each of the components (A) and (B) to be added can be determined depending on the kind of food products containing off-flavor substances and the contents thereof.

The contents of off-flavor substances in oral products vary depending on the kind of the substance and the form of the oral product containing the substance. For example, an off-flavor is felt when the content is not less than 1% by weight in an aqueous solution of a soybean powder, not less than 1% by weight in an aqueous solution of whey, and not less than 0.2% by weight in an aqueous solution of an amino acid mixture. Components (A) and (B) in the present invention can be added to an off-flavor substance at the following proportions:
component (A): with respect to the total weight of the off-flavor substance and when converted to the weight of a free form, generally not less than 0.01 ppm by weight, preferably not less than 0.02 ppm by weight, more preferably not less than 0.2 ppm by weight, generally not more than 100% by weight, preferably not more than 10% by weight, more preferably not more than 5% by weight, specifically, 0.01 ppm by weight to 100% by weight, preferably 0.02 ppm by weight to 10% by weight, more preferably 0.2 ppm by weight to 5% by weight; in another embodiment, generally not less than 0.01 ppm by weight, preferably not less than 0.02 ppm by weight, more preferably not less than 0.1 ppm by weight, further preferably not less than 0.2 ppm by weight, generally not more than 100% by weight, preferably not more than 10% by weight, more preferably not more than 5% by weight, further preferably not more than 1% by weight, specifically, 0.01 ppm by weight to 100% by weight, preferably 0.02 ppm by weight to 10% by weight, more preferably 0.1 ppm by weight to 5% by weight, further preferably 0.2 ppm by weight to 1% by weight
component (B): with respect to the total weight of the off-flavor substance and when converted to the weight of a free form, generally not less than 0.01 ppm by weight, preferably not less than 0.03 ppm by weight, more preferably not less than 0.3 ppm by weight, generally not more than 240% by weight, preferably not more than 30% by weight, more preferably not more than 15% by weight, specifically, generally 0.01 ppm by weight to 240% by weight, preferably 0.03 ppm by weight to 30% by weight, more preferably 0.3 ppm by weight to 15% by weight; in another embodiment, generally not less than 0.01 ppm by weight, preferably not less than 0.03 ppm by weight, more preferably not less than 0.1 ppm by weight, further preferably not less than 0.3 ppm by weight, generally not more than 240% by weight, preferably not more than 30% by weight, more preferably not more than 20% by weight, further preferably not more than 15% by weight, specifically, generally 0.01 ppm by weight to 240% by weight, preferably 0.03 ppm by weight to 30% by weight, more preferably 0.1 ppm by weight to 20% by weight, further preferably 0.3 ppm by weight to 15% by weight.

Specifically, component (B) in the present invention can be added to an off-flavor substance at the following proportions:
when GABA is contained as component (B): with respect to the total weight of the off-flavor substance and when converted to the weight of a free form, generally not less than 0.01 ppm by weight, preferably not less than 0.03 ppm by weight, more preferably not less than 0.1 ppm by weight, further preferably not less than 0.3 ppm by weight, generally not more than 2% by weight, preferably not more than 3000 ppm by weight, more preferably not more than 200 ppm by weight, further preferably not more than 1500 ppm by weight, specifically, generally 0.01 ppm by weight to 2% by weight, preferably 0.03 to 3000 ppm by weight, more preferably 0.1 to 2000 ppm by weight, further preferably 0.3 to 1500 ppm by weight;
when serine is contained as component (B): with respect to the total weight of the off-flavor substance and when converted to the weight of a free form, generally not less than 1 ppm by weight, preferably not less than 3 ppm by weight, more preferably 10 ppm by weight, further preferably 30 ppm by weight, generally not more than 240% by weight, preferably not more than 30% by weight, more preferably not more than 20 ppm by weight, further preferably not more than 15% by weight, specifically, generally 1 ppm by weight to 240% by weight, preferably 3 ppm by weight to 30% by weight, more preferably 10 ppm by weight to 20% by weight, further preferably 30 ppm by weight to 15% by weight.

In the composition of the present invention, a specific amount of each of the components (A) and (B) to be added to an oral product is as follows.

For example, when the off-flavor substance is soybean protein, which is a vegetable protein, the amount to be added is as follows, though not limited thereto.
component (A): with respect to the total weight of the soybean protein, generally not less than 0.02 ppm by weight, preferably not less than 0.2 ppm by weight, more preferably not less than 0.5 ppm by weight, further preferably not less than 2.5 ppm by weight, generally not more than 10% by weight, preferably not more than 1% by weight, more preferably not more than 6250 ppm by weight, further preferably not more than 1250 ppm by weight, specifically, generally 0.02 ppm by weight to 10% by weight, preferably 0.2 ppm by weight to 1% by weight, more preferably 0.5 to 6250 ppm by weight, further preferably 2.5 to 1250 ppm by weight;
when GABA is contained as component (B): with respect to the total weight of the soybean protein, generally not less than 0.03 ppm by weight, preferably not less than 0.3 ppm by weight, more preferably not less than 0.75 ppm by weight, further preferably not less than 3.75 ppm by weight, generally not more than 3000 ppm by weight, preferably not more than 300 ppm by weight, more preferably not more than 150 ppm by weight, further preferably not more than 30 ppm by weight, specifically, generally 0.03 to 3000 ppm by weight, preferably 0.3 to 300 ppm by weight, more preferably 0.75 to 150 ppm by weight, further preferably, 3.75 to 30 ppm by weight;
when serine is contained as component (B): with respect to the total weight of the soybean protein, generally not less than 3 ppm by weight, preferably not less than 30 ppm by weight, more preferably not less than 75 ppm by weight, further preferably not less than 375 ppm by weight, generally not more than 30% by weight, preferably not more than 3% by weight, more preferably not more than 1.5% by weight, further preferably not more than 3000 ppm by weight, specifically, generally 3 ppm by weight to 30% by weight, preferably 30 ppm by weight to 3% by weight, more preferably 75 ppm by weight to 1.5% by weight, further preferably 375 to 3000 ppm by weight.

When the off-flavor substance is whey, which is an animal protein, the amount to be added is as follows, though not limited thereto.
component (A): with respect to the total weight of the whey, generally not less than 0.01 ppm by weight, preferably not less than 0.1 ppm by weight, more preferably not less than 0.25 ppm by weight, further preferably not less than 1.25 ppm by weight, generally not more than 5% by weight, preferably not more than 5000 ppm by weight, more preferably not more than 3125 ppm by weight, further preferably not more than 625 ppm by weight, specifically, generally 0.01 ppm by weight to 5% by weight, preferably 0.1 to 5000 ppm by weight, more preferably 0.25 to 3125 ppm by weight, further preferably 1.25 to 625 ppm by weight;
when GABA is contained as component (B): with respect to the total weight of the whey, generally not less than 0.01 ppm by weight, preferably not less than 0.1 ppm by weight, more preferably not less than 0.375 ppm by weight, further preferably not less than 1.875 ppm by weight, generally not more than 1500 ppm by weight, preferably not more than 150 ppm by weight, more preferably not more than 75 ppm by weight, further preferably not more than 15 ppm by weight, specifically, generally 0.01 to 1500 ppm by weight, preferably 0.1 to 150 ppm by weight, more preferably 0.375 to 75 ppm by weight, further preferably 1.875 to 15 ppm by weight;
when serine is contained as component (B): with respect to the total weight of the whey, generally not less than 1 ppm by weight, preferably not less than 10 ppm by weight, more preferably not less than 37.5 ppm by weight, further preferably not less than 187.5 ppm by weight, generally not more than 15% by weight, preferably not more than 1.5% by weight, more preferably not more than 7500 ppm by weight, further preferably not more than 1500 ppm by weight, specifically, generally 1 ppm by weight to 15% by weight, preferably 10 ppm by weight to 1.5% by weight, more preferably 37.5 to 7500 ppm by weight, further preferably 187.5 to 1500 ppm by weight.

When the off-flavor substance is an amino acid, the amount to be added is as follows, though not limited thereto. component (A): with respect to the total weight of the amino acid, generally not less than 0.2 ppm by weight, preferably not less than 2 ppm by weight, more preferably not less than 4 ppm by weight, further preferably not less than 20 ppm by weight, generally not more than 100% by weight, preferably not more than 10% by weight, more preferably not more than 5% by weight, more preferably not more than 1% by weight, specifically, generally 0.2 ppm by weight to 100% by weight, preferably 2 ppm by weight to 10% by weight, more preferably 4 ppm by weight to 5% by weight, further preferably 20 ppm by weight to 1% by weight;
when GABA is contained as component (B): with respect to the total weight of the amino acid, generally not less than 0.3 ppm by weight, preferably not less than 3 ppm by weight, more preferably not less than 6 ppm by weight, further preferably not less than 30 ppm by weight, generally not more than 2% by weight, preferably not more than 2000 ppm by weight, more preferably not more than 1200 ppm by weight, further preferably not more than 240 ppm by weight, specifically, generally 0.3 ppm by weight to 2% by weight, preferably 3 to 2000 ppm by weight, more preferably 6 to 1200 ppm by weight, further preferably 30 to 240 ppm by weight;
when serine is contained as component (B) : with respect to the total weight of the amino acid, generally not less than 30 ppm by weight, preferably not less than 300 ppm by weight, more preferably not less than 600 ppm by weight, further preferably not less than 3000 ppm by weight, generally not more than 240% by weight, preferably not more than 24% by weight, more preferably not more than 12% by weight, further preferably not more than 2.4% by weight, specifically, generally 30 ppm by weight to 240% by weight, preferably 300 ppm by weight to 24% by weight, more preferably 600 ppm by weight to 12% by weight, further preferably 3000 ppm by weight to 2.4% by weight.

The weight ratio of the amounts of the components (A) and (B) to be added ((A):(B)) in the method of the present invention is generally 1:0.0001 to 10000, preferably 1:0.0005 to 5000, more preferably 1:0.001 to 2000, further preferably 1:0.003 to 1200, from the aspect of suppressing off-flavors, when converted to the weight of a free form.

Specifically, the weight ratio of the amounts of the components (A) and (B) GABA to be added ((A):GABA) in the method of the present invention is generally 1:0.0001 to 100, preferably 1:0.0005 to 50, more preferably 1:0.001 to 20, further preferably 1:0.003 to 12, from the aspect of suppressing off-flavors, when converted to the weight of a free form.

The weight ratio of the amounts of the components (A) and (B) serine to be added ((A):serine) in the method of the present invention is generally 1:0.01 to 10000, preferably 1:0.05 to 5000, more preferably 1:0.1 to 2000, further preferably 1:0.3 to 1200, from the aspect of suppressing off-flavors, when converted to the weight of a free form.

In the method of the present invention, when GABA and serine are contained as component (B), the weight ratio of the amounts to be added (GABA:serine) is generally 1:1 to 5000, preferably 1:5 to 2000, more preferably 1:10 to 1000, further preferably 1:12.5 to 800, from the aspect of suppressing off-flavors, when converted to the weight of a free form.

The method of the present invention may include treatments and steps generally included in the production step of oral products.

In the method of the present invention, methods for adding components (A) and (B) to oral products include direct addition to oral products, addition after dilution with water or a solvent, and the like, and the form of addition is not particularly limited. In addition, components (A) and (B) may be added to the oral product at any time, including addition to starting materials before production of oral products, during production, after completion, immediately before eating, during eating, and the like. Components (A) and (B) may be added at the same time or at different times. In addition, various definitions and preferable ranges are as described above.

The present invention also includes a method for producing an oral product with a suppressed off-flavor, including adding components (A) and (B) to the oral product (sometimes to be abbreviated as the production method of the present invention).

The definition of components (A) and (B), oral products, and the like that can be used in the production method of the present invention are as described above.

The amounts of components (A) and (B) to be added to the oral product (the amounts of components (A) and (B) added to the oral product) and suitable ranges thereof in the production method of the present invention are as described above.

In addition, the content of the component having an off-flavor in the oral product in the production method of the present invention is as described above.

The addition ratio of components (A) and (B) in the production method of the present invention can be appropriately determined according to various conditions such as the kind of components (A) and (B) and the concentration of off-flavor substance.

The concentration of components (A) and (B) added in the production method of the present invention is not particularly limited, and appropriately determined according to the kind and content of the off-flavor substance applied to the method of the present invention. That is, in the present invention, an oral product with a suppressed off-flavor as a whole as compared with an oral product free of components (A) and (B) can be obtained by adding components (A) and (B) to an oral product containing an off-flavor substance.

The concentrations of the above-mentioned components (A) and (B) to be added may be the amounts of ingestion (concentration at the time of eating) of the components (A) and (B), either as is or modified as appropriate, depending on the manner of ingestion of the oral product. That is, when producing a food or drink that is taken without being concentrated or diluted (e.g., eaten as is), the addition concentrations of the components (A) and (B) exemplified above can be read as the amounts of ingestion of the components (A) and (B). In addition, when producing a food or drink that is taken after concentration or dilution, the amounts of ingestion of the components (A) and (B) can be determined from the addition concentrations of the components (A) and (B) exemplified above and the magnification of concentration or dilution. For example, when producing a food or drink that is diluted 10 times and eaten, 10 times the addition concentrations of components (A) and (B) exemplified above can be determined as the amount of ingestion of the components (A) and (B).

The production method of the present invention may further include a step of adding other components (components other than components (A) and (B)). The "other components" here are as described above. It may also include treatments and steps generally included in the production step of food and drink, such as a step of dissolving, a step of filling in a container, and a step of sterilization.

Oral products obtained by the production method of the present invention are specifically oral products with a suppressed off-flavor.

In the production method of the present invention, oral products can be produced using the same starting materials and the same method as those for general oral products, except that components (A) and (B) are added. Components (A) and (B) may be added at any stage of the production steps of oral products. That is, components (A) and (B) may be added to raw materials of oral products, may be added to oral products in the process of production, or may be added to finished food and drink. Further, components (A) and (B) may be added only once, or may be added in two or more divided portions. When components (A) and (B) are added, they may be added at the same time to the oral product or raw materials thereof, or may be added to the oral product or raw materials thereof each separately, or separately in any combination. That is, as long as components (A) and (B) coexist in an oral product, an off-flavor suppressing effect can be obtained.

The present invention also includes an oral product containing components (A) and (B), especially an oral product with a suppressed off-flavor, obtained by the production method of the present invention (also referred to as the oral product of the present invention). The oral product of the present invention may contain "other ingredients" as necessary, where various definitions and preferable ranges are as described above.

### [Example]

The present invention is described in more detail in the following Examples; however, the present invention is not limited by these examples in any way.

When "%", "ppm", "ppb" are indicated in the present specification, they mean "% by weight", "ppm by weight", and "ppb by weight", respectively, unless otherwise specified.

### (Example 1) Effect on vegetable protein - 1

### 1. Preparation of samples

A soybean powder (SUPRO661, DuPont Specialty Products Kabushiki Kaisha) was added to water at 4%(w/w), stirred, and then left at 5°C for one day. The supernatant liquid, or supernatant liquid after centrifugation (3000 rpm, 10 min, 15°C) was used. γ-Glu-Val-Gly (component A) was a commercially available product or was prepared according to the chemical synthesis method disclosed in JP-A-2010-154862. GABA (Sankuto Co., Ltd.) and serine (Ajinomoto Co., Inc.) were prepared by adding water to the concentrations shown in Table 3.

### 2. Test method

Based on solutions A1 to A3 in the following Table 1 and Table 2 (approximate evaluation scale), about 10 mL of the sample was swallowed, five evaluators each gave a score, and the average score was calculated (displayed).

**[Table 1]**

| | | soybean powder 4% aqueous solution: |
|---|---|---|
| No. | material name | flavor (green smell) |
| A1 | base solution (component A no addition) | 10 |
| A2 | base solution (component A 1 ppm) | 8 |
| A3 | 1/2 diluted solution of A1 | 4 |

**[Table 2]**

| approximate evaluation scale: | |
|---|---|
| 10 | felt (same as component A no addition) |
| 7 | felt a little |
| 5 | slightly felt |
| 3 | hardly felt |
| 0 | not felt |

### 3. Evaluation

The results of the average scores of the sensory evaluation by five evaluators are shown in Table 3.

**[Table 3]**

| material name | addition concentration (ppm) | soybean powder 4% aqueous solution: | |
|---|---|---|---|
| | | flavor (green smell) | |
| | | component A no addition | 1 ppm component A added |
| GABA | 0.3 | 10 | 4 |
| serine | 30 | 10 | 4 |
| GABA+serine | 0.3+30 | 10 | 3 |

### (Example 2) Effect on vegetable protein - 2

### 1. Preparation of samples

In the same manner as in Example 1, a soybean powder 4% solution was prepared. γ-Glu-Val-Gly (component A), GABA, and serine were each prepared by adding water to the concentrations shown in Table 4 or 5.

### 2. Test method

About 10 mL of the sample described in the following Table 4 or 5 was swallowed, two evaluators each gave a score, and the average score was calculated (displayed).

### 3. Evaluation

The results of the average scores of the sensory evaluation by two evaluators are shown in Tables 4 and 5.

**[Table 4]**

| | | component A | | | | |
|---|---|---|---|---|---|---|
| | concentration (ppm) | 0 | 0.1 | 1 | 10 | 50 |
| GABA | 0 | 10 | 9 | 8 | 7 | 7 |
| | 0.15 | 10 | 7 | 6 | 6 | 6 |
| | 0.3 | 10 | 5 | 4 | 3 | 3 |
| | 0.6 | 10 | 5 | 3 | 3 | 3 |
| | 1.2 | 10 | 6 | 3 | 3 | 3 |

**[Table 5]**

| | | component A | | | | |
|---|---|---|---|---|---|---|
| | concentration (ppm) | 0 | 0.1 | 1 | 10 | 50 |
| serine | 0 | 10 | 9 | 8 | 7 | 7 |
| | 15 | 10 | 6 | 6 | 5 | 5 |
| | 30 | 10 | 6 | 4 | 3 | 3 |
| | 60 | 10 | 6 | 4 | 3 | 3 |
| | 120 | 10 | 6 | 4 | 3 | 3 |

### (Example 3) Effect on animal protein (milk) - 1

### 1. Preparation of samples

Milk serum (WPC80, Lacto Japan Warrnambool Co., Ltd. Milk serum protein concentrate) was added to water to 8%(w/w) and stirred, and the solution with the milk serum dissolved therein was used. γ-Glu-Val-Gly, GABA, and serine used were the same as those used in Example 1 and were each prepared by adding water to the concentrations shown in Table 7.

### 2. Test method

Based on solutions B1 to B3 in the following Table 6 and Table 2 (approximate evaluation scale), about 10 mL of the sample was swallowed, five evaluators each gave a score, and the average score was calculated (displayed).

**[Table 6]**

| | | milk (WPC) 8% solution |
|---|---|---|
| No. | material name | flavor (potato smell, stuffy smell) |
| B1 | base solution (component A no addition) | 10 |
| B2 | base solution component A 1 ppm | 8 |
| B3 | 1/2 diluted solution of B1 | 4 |

### 3. Evaluation

The results of the average scores of the sensory evaluation by five evaluators are shown in Table 7.

**[Table 7]**

| material name | addition concentration (ppm) | milk (WPC) 8% solution | |
|---|---|---|---|
| | | flavor (potato smell, stuffy smell) | |
| | | component A no addition | component A 1 ppm added |
| GABA | 0.3 | 10 | 5 |
| serine | 30 | 10 | 4 |
| GABA+serine | 0.3+30 | 10 | 3 |

### (Example 4) Effect on animal protein - 2

### 1. Preparation of samples

In the same manner as in Example 3, a milk serum 8% solution was prepared. γ-Glu-Val-Gly (component A), GABA, and serine were each prepared by adding water to the concentrations shown in Table 8 or 9.

### 2. Test method

About 10 mL of the sample described in the following Table 8 or 9 was swallowed, two evaluators each gave a score in the same manner as in Example 3, and the average score was calculated (displayed).

### 3. Evaluation

The results of the average scores of the sensory evaluation by two evaluators are shown in Tables 8 and 9.

**[Table 8]**

| | | component A | | | | |
|---|---|---|---|---|---|---|
| | concentration (ppm) | 0 | 0.1 | 1 | 10 | 50 |
| GABA | 0 | 10 | 9 | 8 | 7 | 6 |
| | 0.15 | 10 | 7 | 6 | 6 | 5 |
| | 0.3 | 10 | 6 | 5 | 4 | 4 |
| | 0.6 | 10 | 6 | 4 | 3 | 3 |
| | 1.2 | 10 | 6 | 4 | 3 | 3 |

**[Table 9]**

| | | component A | | | | |
|---|---|---|---|---|---|---|
| | concentration (ppm) | 0 | 0.1 | 1 | 10 | 50 |
| serine | 0 | 10 | 9 | 8 | 7 | 6 |
| | 15 | 10 | 7 | 6 | 6 | 6 |
| | 30 | 10 | 6 | 4 | 3 | 3 |
| | 60 | 10 | 6 | 4 | 3 | 3 |
| | 120 | 10 | 6 | 4 | 3 | 3 |

### (Example 5) Effect on amino acid - 1

### 1. Preparation of samples

An amino acid MIX powder (leucine, valine, isoleucine, lysine, methionine, phenylalanine, tryptophan, threonine, histidine: MP9 (Ajinomoto Co., Inc.)) was added to water to 0.5%(w/w) and stirred, and the solution with the amino acid dissolved therein was used. γ-Glu-Val-Gly, GABA, and serine used were the same as those used in Example 1 and were each prepared by adding water to the concentrations shown in Table 11.

### 2. Test method

Based on solutions C1 to C3 in the following Table 10 and Table 2 (approximate evaluation scale), about 10 mL of the sample was swallowed, five evaluators each gave a score, and the average score was calculated (displayed).

**[Table 10]**

| | | amino acid (0.5%) |
|---|---|---|
| No. | material name | flavor (potato smell, stuffy smell) |
| C1 | base solution (component A no addition) | 10 |
| C2 | base solution component A 1 ppm | 8 |
| C3 | 1/2 diluted solution of C1 | 4 |

### 3. Evaluation

The results of the average scores of the sensory evaluation by five evaluators are shown in Table 11.

**[Table 11]**

| material name | addition concentration (ppm) | amino acid (MP9) | |
|---|---|---|---|
| | | flavor (potato smell, stuffy smell) | |
| | | component A no addition | component A 1 ppm added |
| GABA | 0.3 | 10 | 5 |
| serine | 30 | 9 | 4 |
| GABA+serine | 0.3+30 | 9 | 3 |

### (Example 6) Effect on amino acid - 2

### 1. Preparation of samples

In the same manner as in Example 5, an amino acid 0.5% solution was prepared. γ-Glu-Val-Gly (component A), GABA, and serine were each prepared by adding water to the concentrations shown in Table 12 or 13.

### 2. Test method

About 10 mL of the sample described in the following Table 12 or 13 was swallowed, two evaluators each gave a score in the same manner as in Example 5, and the average score was calculated (displayed).

### 3. Evaluation

The results of the average scores of the sensory evaluation by two evaluators are shown in Tables 12 and 13.

**[Table 12]**

| | | component A | | | | |
|---|---|---|---|---|---|---|
| | concentration (ppm) | 0 | 0.1 | 1 | 10 | 50 |
| GABA | 0 | 10 | 9 | 8 | 8 | 8 |
| | 0.15 | 10 | 7 | 6 | 6 | 6 |
| | 0.3 | 10 | 6 | 5 | 4 | 4 |
| | 0.6 | 10 | 5 | 4 | 4 | 4 |
| | 1.2 | 10 | 5 | 4 | 4 | 4 |

**[Table 13]**

| | | component A | | | | |
|---|---|---|---|---|---|---|
| | concentration (ppm) | 0 | 0.1 | 1 | 10 | 50 |
| serine | 0 | 10 | 9 | 8 | 7 | 7 |
| | 15 | 10 | 7 | 6 | 5 | 5 |
| | 30 | 9 | 6 | 4 | 3 | 3 |
| | 60 | 9 | 6 | 3 | 2 | 2 |
| | 120 | 9 | 6 | 4 | 2 | 2 |

It has been found that the combination of component A with GABA and/or serine has the effect of synergistically suppressing the off-flavor of food products.

### [Industrial Applicability]

According to the present invention, foods and drinks with suppressed off-flavors can be provided.

This application is based on a patent application No. 2021-083397 filed in Japan, the contents of which are encompassed in full herein.

## Claims

1. A composition for suppressing an off-flavor, comprising the following components (A) and (B):
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one selected from the group consisting of γ-aminobutyric acid and serine.

2. The composition according to claim 1, wherein the component (A) is γ-Glu-Val-Gly or a salt thereof.

3. The composition according to claim 1 or 2, wherein the off-flavor is an odor derived from at least one off-flavor substance selected from the group consisting of vegetable proteins, animal proteins, and amino acids.

4. The composition according to any one of claims 1 to 3, wherein the weight ratio of components (A):(B) is 1:0.0001 to 10000 when converted to the weight of a free form.

5. The composition according to any one of claims 1 to 4, which is used such that the amount of component (A) added to the oral product is 0.01 to 200 ppm by weight with respect to the total weight of the oral product, when converted to the weight of a free form.

6. The composition according to any one of claims 1 to 5, which is used such that the amount of component (B) added to the oral product is 0.01 to 500 ppm by weight with respect to the total weight of the oral product, when converted to the weight of a free form.

7. A method for suppressing an off-flavor of an oral product, comprising adding the following components (A) and (B):
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one selected from the group consisting of γ-aminobutyric acid and serine.

8. The method according to claim 7, wherein the component (A) is γ-Glu-Val-Gly or a salt thereof.

9. The method according to claim 7 or 8, wherein the off-flavor is an odor derived from at least one off-flavor substance selected from the group consisting of vegetable proteins, animal proteins, and amino acids.

10. The method according to any one of claims 7 to 9, wherein the ratio of the amount of component (B) to be added to the amount of component (A) to be added is 1:0.0001 to 10000 when converted to the weight of a free form.

11. The method according to any one of claims 7 to 10, wherein the amount of component (A) to be added with respect to the total weight of the off-flavor substance in the oral product is 0.01 ppm by weight to 100% by weight when converted to the weight of a free form.

12. The method according to any one of claims 7 to 11, wherein the amount of component (B) to be added with respect to the total weight of the off-flavor substance in the oral product is 0.01 ppm by weight to 240% by weight when converted to the weight of a free form.

13. A method for producing an oral product with a suppressed off-flavor, comprising adding the following components (A) and (B) to an oral product:
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one selected from the group consisting of γ-aminobutyric acid and serine.

14. The method according to claim 13, wherein the component (A) is γ-Glu-Val-Gly or a salt thereof.

15. The method according to claim 13 or 14, wherein the off-flavor is an odor derived from at least one off-flavor substance selected from the group consisting of vegetable proteins, animal proteins, and amino acids.

16. The method according to any one of claims 13 to 15, wherein the ratio of the amount of component (B) to be added to the amount of component (A) to be added is 1:0.0001 to 10000 when converted to the weight of a free form.

17. The method according to any one of claims 13 to 16, wherein the amount of component (A) to be added with respect to the total weight of the off-flavor substance in the oral product is 0.01 ppm by weight to 100% by weight when converted to the weight of a free form.

18. The method according to any one of claims 13 to 17, wherein the amount of component (B) to be added with respect to the total weight of the off-flavor substance in the oral product is 0.01 ppm by weight to 240% by weight when converted to the weight of a free form.

19. An oral product obtained by the method according to any one of claims 13 to 18.
